# EUROPÄISCHE PATENTANMELDUNG

(11) **EP 0 727 513 A2**
(43) Veröffentlichungstag der Anmeldung: **21.08.1996**
(21) Anmeldenummer: 95116548.9
(22) Anmeldetag: 20.10.1995
(51) Int. Cl.: D01F 11/12, C03C 14/00

(54) **Beschichtete Endlosfaser**

(30) Priorität: 07.12.1994 DE 4443471
(71) Anmelder: DORNIER GmbH, D-88039 Friedrichshafen (DE)
(72) Erfinder: Mayer, Albrecht, Dipl.-Ing., D-72805 Lichtenstein (DE); Haug, Tilman, Dr.rer.nat., D-88690 Uhldingen-Mühlhofen (DE); Vogel, Walter, Dr.rer.nat., D-88048 Friedrichshafen (DE)
(74) Vertreter: Landsmann, Ralf, Dipl.-Ing.

(57) **Zusammenfassung**

Endlosfasern mit einer anisotropen Kohlenstoff-Beschichtung, die durch Pyrolyse von flüssigen oder gelösten Kohlenstoff-Precursoren hergestellt wird.

## Beschreibung

Die Erfindung betrifft Endlosfasern für faserverstärkte Keramiken, die mit Hilfe eines Nassbeschichtungsverfahrens mit einer anisotropen Kohlenstoffschicht versehen werden.

Bei der Herstellung von faserverstärkten Keramiken (CMC = ceramic matrix composite) entstehen durch unterschiedliche thermische Ausdehnungskoeffizienten der Fasern und der Matrix und durch den Matrixschwund bei der Herstellung mittels Polymerpyrolyse innere Spannungen, die zu einer Faservorschädigung führen können. Diese Vorschädigung ist um so ausgeprägter je fester die Faser-Matrix-Anbindung ist.
Bei einer schwächeren Anbindung werden Vorschädigungen, hervorgerufen durch innere Spannungen, verhindert und die Zugfestigkeit der Verbundkörper durch Mechanismen zur Verhinderung der Rissausbreitung erhöht. Die Sprödigkeit des Materials wird stark verringert und die Spannungs-Dehnungs-Kurve ist im oberen Bereich nicht linear. Die faserverstärkte Keramik hat dann ein quasi-duktiles Zugverhalten ähnlich wie bei metallischen Werkstoffen. Zusätzlich wird die Bruchenergie durch Reibungsarbeit beim Herausziehen der Fasern aus der Matrix (pull-out Effekt) drastisch vergrössert. Das Material ist dadurch weniger spröde und damit wesentlich schadenstoleranter als bei zu fester Faser-Matrix-Anbindung.
Daher wird versucht, die Stärke der Faser-Matrix-Anbindung gezielt durch eine Beschichtung zu reduzieren und damit im Hinblick auf die späteren Verbundkörperfestigkeiten zu optimieren. Als Material für solche Gleitschichten eignet sich insbesondere im Hochtemperaturbereich bis 1600°C pyrolytischer Kohlenstoff mit einer anisotropen, graphitähnlichen Struktur.
Bisher wurden solche Beschichtungen mit Hilfe des CVD-Verfahrens (Chemical vapour deposition) auf Endlosfasern aufgebracht. Die Abscheidung des Kohlenstoffs erfolgt dabei aus der Gasphase, wobei die Abscheideraten aber infolge der langsamen Reaktionskinetik sehr niedrig sind. Die Verweilzeit der Faser im Abscheideofen muss somit relativ lang gehalten werden. Aus diesem Grund ist eine hohe Faserdurchzugsgeschwindigkeit nicht realisierbar und die Kosten sind für die CVD-Beschichtung sehr hoch.
Versuche, die Abscheiderate und damit die mögliche Durchzugsgeschwindigkeit zu erhöhen, hatten entweder einen grossen verfahrenstechnischen Aufwand zur Folge oder resultierten in einer Verschlechterung der Beschichtungsqualität.

Das Ziel der Erfindung ist es, ein kostengünstiges Beschichtungsverfahren zu ermöglichen, bei dem die Aufbringung von graphitierbarem Beschichtungsmaterial (Kohlenstoff-Precursoren) in der flüssigen Phase erfolgt. Die flüssige Aufbringung erlaubt dabei wesentlich höhere Durchzugsgeschwindigkeiten als bei der CVD-Methode nach dem heutigen Stand der Technik.

Bekannt ist eine Beschichtungsgeschwindigkeit von 0,5 cm/s. Das Nassbeschichtungsverfahren jedoch erlaubt Durchzugsgeschwindigkeiten der Faser von 5 cm/s und ist somit 10-mal schneller. Das Verfahren ist im Hinblick auf einen wartungsarmen und störungsfreien Dauerbetrieb der Beschichtungsanlage auszulegen.

Der Erfindung liegt die Aufgabe zugrunde, ein Verfahren zum kontinuierlichen Beschichten von Endlosfasern mit pyrolytischem Kohlenstoff zu entwickeln. Die Erfindung beinhaltet ebenfalls die Entwicklung einer Vorrichtung oder Anlage zur Durchführung des Verfahrens, um damit die Nassbeschichtung an Endlosfasern unter folgenden Randbedingungen vorzunehmen:
- Verarbeitung von Faserbündeln, die aus bis zu 12000 Filamenten (Einzelfasern) bestehen (z.B. T800-Kohlenstoffaser der Firma Toray (J) mit 6000 Filamenten oder die oxidische "Nextel"-Faser der Firma 3M (USA) mit 770 Filamenten).
- Entfernung der vom Faserhersteller aufgebrachten Schutzschlichte (engl. sizing) vor dem Aufbringen der neuen Beschichtung.
- Abscheidung von anisotropen, graphitähnlichen Beschichtungen auf Kohlenstoff-, SiC- oder oxidischen Fasern.
- Gleichmässige Umhüllung aller Filamente eines Faserbündels mit einer möglichst defektfreien, haftfesten Schicht.
- Erzeugung von anisotropen Kohlenstoff-Beschichtungen durch die Pyrolyse von flüssig aufgebrachten, organischen Precursoren.

Erfindungsgemäss wird die Aufgabe dadurch gelöst, dass zunächst die Faserschlichte entfernt wird und dann das Faserbündel mit einem flüssigen Kohlenstoff-Precursor (z.B. Pech) oder mit einem in einem Lösungsmittel gelösten Kohlenstoff-Precursor (z.B. Pech oder/und Phenolharz) infiltriert wird. Bei der Verwendung eines Lösungsmittels muss dieses im nachfolgenden Prozesschritt thermisch entfernt werden.
Im letzten Schritt wird die aufgebrachte Beschichtung aus Kohlenstoff-Precursoren in einem thermischen Zersetzungsprozess unter Schutzgas (Pyrolyse) zu einer anisotropen Kohlenstoffschicht umgewandelt.
Das Verfahren ist vom Grundprinzip her ähnlich einem bekannten Verfahren für die Faserbeschichtung bei faserverstärkten Metallen. Die einzelnen Verfahrensschritte und Prozessparameter sind aber grösstenteils sehr verschieden.

Die Erfindung wird nachfolgend anhand von Figuren näher erläutert. Es zeigen:
Fig. 1 die schematische Darstellung des Beschichtungsvorgangs und
Fig. 2 eine typische Spannungs-Dehnungs-Kurve von C/SiC-Proben.

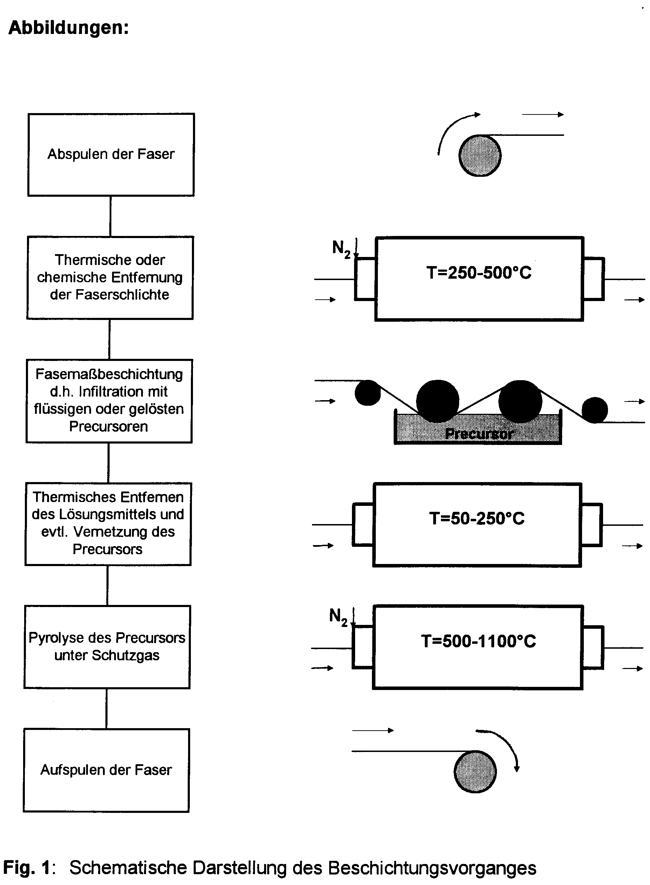

Die einzelnen Prozesstufen bei der Fasernassbeschichtung (Fig. 1) lassen sich in die folgenden Verfahrensschritte einteilen :
- Abspulen der Faser von der Originalspule des Faserherstellers
- Thermische oder chemische Entfernung der Schlichte (eng. desizing)
- Infiltration der Faser mit den flüssigen oder gelösten Precursoren
- Trocknung der Faser und eventuell Vernetzen der Precursoren
- Pyrolyse der Precursoren
- Aufspulen der Faser auf neue Spule.

Die einzelnen Prozesschritte mit ihren teilweise verschiedenen Verfahrensvarianten werden nachfolgend detailliert beschrieben.
Die Spule mit der zu beschichtenden Faser wird zunächst in der Abspulvorrichtung befestigt, wobei der Spulenhalter mit einer geregelten Magnetpulverbremse ausgerüstet ist. Die Bremse erlaubt zusammen mit einer ebenfalls in die Anlage integrierten Messeinrichtung zur Bestimmung der Zugkräfte in der Faser eine Regelung dieser Zugkräfte.
Fast alle auf dem Markt erhältlichen Fasern, die für Anwendungen in faserverstärkten Keramiken und Gläsern in Betracht kommen, sind vom Hersteller mit einer Schlichte (engl. sizing) versehen. So sind z.B. die Filamente der T800-Kohlenstoffaser der Firma Toray mit ca. 2 Gew.% Epoxidharz benetzt. Diese Schlichte soll den Abrieb der Faser reduzieren und durch ihre Verklebungen zwischen den Filamenten den Zusammenhalt des Faserbündels und damit dessen Verarbeitbarkeit verbessern. Das als Schlichtematerial verwendete Epoxidharz ist im Hinblick auf Anwendungen in faserverstärkten Kunststoffen optimiert. Die Schlichte muß daher vor dem Aufbringen einer neuen Beschichtung entfernt werden. Die Entschlichtung kann dabei sowohl chemisch als auch thermisch erfolgen.
Bei der chemischen Entschlichtung läuft die Faser durch ein Lösungsmittelbad (z.B. Aceton) und wird anschliessend getrocknet. Das Schlichtemittel (z.B. Epoxidharz) wird dabei gelöst und somit von der Faser entfernt.
Die thermische Entschlichtung basiert auf der thermischen Zersetzung bzw. Verbrennung der Schlichte. Im Fall einer Epoxidharz-Schlichte sind z.B. Temperaturen von 300 - 400°C ausreichend für eine vollständige Entschlichtung. Diese Aufheizung kann sowohl durch Erwärmung in einem Rohrofen, durch Faseraufheizung mittels Laserbestrahlung, durch Mikrowellenaufheizung oder durch ein Heissluftgebläse im Gegenstromprinzip erfolgen.

In der Beschichtungseinheit wird die Faser über zwei Walzen geführt, die laufend mit Beschichtungslösung (z.B. Phenolharz und/oder Pech in 1-Methyl-2-Pyrrolidon (NMP) gelöst) benetzt werden. Dadurch ist eine Tränkung von beiden Seiten der Faser und somit eine gute Infiltration des ganzen Faserbündels gewährleistet. Die Förderung der Beschichtungslösung aus einem Vorratsbehälter erfolgt mittels Lösungsmittelpumpen.
Anschliessend wird die Faser in einer Trocknungsstrecke im Heissluftgegenstrom getrocknet, um sicherzustellen, dass vor dem Eintritt in die Pyrolysekammer das gesamte Lösungsmittel verdampft. Die Temperatur des Luftstroms muss dabei mindestens so hoch sein, wie der Siedepunkt des verwendeten Lösungsmittels; bei 1-Methyl-2-Pyrrolidon z.B. ca. 200°C. Bei einigen Precursoren (z.B. Phenolharz) ist eine Vernetzung vor der Pyrolyse sinnvoll, um die Kohlenstoffausbeute zu erhöhen. In diesem Fall muss die Temperatur auf einen für die vollständige Vernetzung ausreichenden Wert eingestellt werden. Bei der Pyrolyse erfolgt die thermische Zersetzung der Precursoren zu Kohlenstoff. Zum Schutz der Kohlenstoff-Beschichtung und einer eventuell verwendeten Kohlenstoffaser muss durch Einblasen von Schutzgas (z.B. Stickstoff oder Argon) eine Oxidation verhindert werden. Die Faserdurchführungen in die und aus der Pyrolysekammer sind als Luftschleusen konzipiert und werden laufend mit Stockstoff oder Argon gespült.
Auch bei der Aufheizung für die Pyrolyse kommen mehrere Verfahrensvarianten in Betracht:
- Aufheizung in einem Rohrofen
- Erhitzung durch Laserstrahlung
- Direkte ohmsche Aufheizung durch Stromleitung in der Faser selbst
- Mikrowellenaufheizung.

Zur Aufheizung in einem Rohrofen läuft das Faserbündel in der Mitte des Rohres, das im Gegenstrom mit Schutzgas (Stickstoff oder Argon) gespült wird und an den Enden mit Luftschleusen versehen ist. Die Energieübertragung basiert dabei sowohl auf dem Strahlungs- als auch auf dem Konvektionsprinzip. Die Pyrolysetemperatur wird in Abhängigkeit von der Fasergeschwindigkeit und vom angestrebten Pyrolysegrad der Beschichtung auf 500 - 1100°C eingestellt.
Beim Laser-Verfahren erfolgt die Aufheizung der Faser durch die Bestrahlung mit einem IR-Laser (CO₂- oder Nd:YAG-Laser). Dazu wird der Laserstrahl in einer speziellen Zylinderlinsen-Optik ellyptisch aufgeweitet und senkrecht von oben auf die Faser gerichtet, wobei die Längsachse des Strahlprofils parallel zur Faser ist. Ein Zylinder-Hohlspiegel, in dessen Brennpunkt die Faser verläuft, spiegelt die an der Faser vorbeigehende Strahlung wieder gebündelt auf die unter Hälfte der Faser zurück. Durch ein ausgewogenes Verhältnis zwischen direkter und indirekter Bestrahlung wird die Faser gleichmässig von beiden Seiten aufgeheizt.
Das Verfahren der ohmschen Aufheizung ist nur bei stromleitenden Fasern (z.B. Kohlenstoffasern) anwendbar. Die Energieeinbringung in die Faser erfolgt direkt über den ohmschen Widerstand der Faser selbst. Zur Einleitung des elektrischen Stroms wird die Faser über mehrere isolierte Graphitrollen, zwischen denen eine Spannung anliegt, geführt. Der negative Temperaturkoeffizient des elektrischen Widerstandes von Kohlenstoffasern begünstigt eine homogene Temperaturverteilung längs der Faser. Die notwendigen Ströme für eine Pyrolysetemperatur bis 1000°C und einer Heizstrecke von 60 mm liegen im Bereich bis zu 3 A bei einer angelegten Spannung von bis zu 25 V.
In der Aufspuleinheit wird die beschichtete Faser wieder auf eine Spule gewickelt. Den Antrieb der Spule übernimmt ein geregelter Elektromotor. Eine der Aufwickelspule vorgeschaltete oszillierende Querauslenkung sorgt für eine saubere Kreuzwicklung mit einstellbarem Kreuzungswinkel.
Die realisierbaren Durchzugsgeschwindigkeiten der Faser sind, im Gegensatz zum CVD-Verfahren, von der angestrebten Beschichtungsdicke unabhängig. Sie wird vielmehr von der Länge der Heizstrecke und dem Temperaturprofil bei der Pyrolyse bestimmt. Mit der vorhandenen Anlage konnten Geschwindigkeiten bis zu 5 cm/s entsprechend 180 m/h erreicht werden.
Aufgrund der Tatsache, dass der Preis für eine Faserbeschichtung neben den verfahrensspezifischen Kostenfaktoren auch stark von der Durchzugsgeschwindigkeit der Faser abhängt, ergeben sich beim Kostenvergleich klare Vorteile für das Nassbeschichtungs-Verfahren. CVD-beschichtete Fasern liegen je nach Hersteller im Preis ca. 3 - 10 mal höher als nassbeschichtete Fasern.

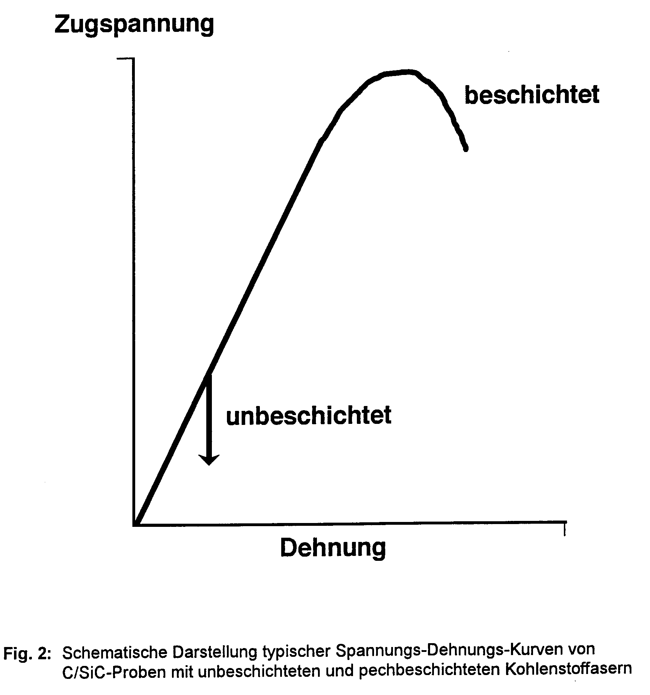

In Fig. 2 sind zwei typische Spannungs-Dehnungs-Kurven für C/SiC-Proben schematisch dargestellt, die nach einem Polymer-Pyrolyse-Verfahren hergestellt wurden. Die Probe mit unbeschichteten Fasern versagt sehr frühzeitig durch Sprödbruch. Im Gegensatz dazu, erreicht die C/SiC-Probe mit pechbeschichteten Fasern wesentlich höhere Festigkeitswerte. Deutlich zu erkennen ist eine ca. 300%ige Festigkeitssteigerung und die entsprechende Zunahme der Bruchdehnung. Der quasi-duktile Verlauf der Spannungs-Dehnungs-Kurve im oberen Bereich bei der Probe aus pechbeschichteten Fasern ist ein Indiz für den durch die Faserbeschichtung ermöglichten Faser pull-out-Effekt (Herausziehen der Fasern aus der Matrix). Infolge der Steigerung der Zugfestigkeit und der Bruchdehnung erhöht sich die Bruchenergie (Fläche unter Spannungs-Dehnungs-Kurve) und damit auch die Schadenstoleranz sehr stark.

## Patentansprüche

1. Endlosfasern mit einer anisotropen Kohlenstoff-Beschichtung, die durch Pyrolyse von flüssigen oder gelösten Kohlenstoff-Precursoren hergestellt wird und bei der Herstellung von faserverstärkten Keramiken oder Gläsern Verwendung findet.

2. Endlosfasern nach Anspruch 1, **dadurch gekennzeichnet**, dass die Faser eine SiC-Faser, eine Kohlenstoffaser oder eine oxidische Faser ist.

3. Endlosfasern nach Anspruch 1, basierend auf einem kontinuierlichen Beschichtungsprozess mit folgenden Schritten: Entschlichtung, Nassbeschichtung mit organischen Precursoren, Trocknung und Pyrolyse im kontinuierlichen Betrieb.

4. Endlosfasern nach Anspruch 1, basierend auf einem kontinuierlichen Beschichtungsprozess nach Anspruch 3, **dadurch gekennzeichnet**, dass die Entschlichtung entweder auf thermischem oder auf chemischem Wege erfolgt, wobei die thermische Entschlichtung mit Hilfe eines Lasers, eines Rohrofens, eines Lufterhitzers, einer Mikrowellenheizung oder durch direkte Widerstandsheizung realisiert wird.

5. Endlosfasern nach Anspruch 1, basierend auf einem kontinuierlichen Beschichtungsprozess nach Anspruch 3, **dadurch gekennzeichnet**, dass als organische Precursoren Peche, Phenolharz mit Graphitierungshilfsmitteln, PVC oder Mischungen dieser Stoffe verwendet werden.

6. Endlosfasern nach Anspruch 1, basierend auf einem kontinuierlichen Beschichtungsprozess nach Anspruch 3, **dadurch gekennzeichnet**, dass der Beschichtungslösung feinst gemahlene Graphitpulver ( Korngrösse d₅₀ ≦ 0,1 µm) zur Steigerung der Pyrolyseausbeute und zur Verbesserung der Schichtstruktur beigemischt werden.

7. Endlosfasern nach Anspruch 1, basierend auf einem kontinuierlichen Beschichtungsprozess nach Anspruch 3, **dadurch gekennzeichnet**, dass als Lösungsmittel für die organische Precursoren Toluol, Chinolin, NMP oder Aceton verwendet werden.

8. Endlosfasern nach Anspruch 1, basierend auf einem kontinuierlichen Beschichtungsprozess nach Anspruch 3, **dadurch gekennzeichnet**, dass die Faseraufheizung für die Pyrolyse mit Hilfe eines Lasers, eines Rohrofens, durch direkte Widerstandsheizung, Mikrowellenbestrahlung oder Induktionsheizung erfolgt.

9. Endlosfasern nach Anspruch 1, basierend auf einem kontinuierlichen Beschichtungsprozess nach Anspruch 3, **dadurch gekennzeichnet**, dass Kohlenstoff-Schichtdicken zwischen 30 und 300 nm erzielt werden.

10. Endlosfasern nach Anspruch 1, basierend auf einem kontinuierlichen Beschichtungsprozess nach Anspruch 3, **dadurch gekennzeichnet**, dass unabhängig von der Schichtdicke Geschwindigkeiten von bis zu 5 cm/s erreicht werden.

11. Endlosfasern nach Anspruch 1, basierend auf einem kontinuierlichen Beschichtungsprozess nach Anspruch 3, **dadurch gekennzeichnet**, dass die Beschichtungsanlage mit mehreren oder sogar vielen parallel laufenden Faserbündeln betrieben wird.

12. Endlosfasern nach Anspruch 1, basierend auf einem kontinuierlichen Beschichtungsprozess nach Anspruch 3, **dadurch gekennzeichnet**, dass die Fasern nach der Pyrolyse ihrer Kohlenstoffschicht unmittelbar einer Polymerinfiltration der Faserbündel zur on-line-Herstellung von faserverstärkten Keramiken über das Polymer-Pyrolyse-Verfahren zugeführt werden.
